# EUROPEAN PATENT SPECIFICATION

(11) **EP 0 682 041 B1**
(45) Date of publication and mention of the grant of the patent: **16.09.1998**
(21) Application number: 95201159.1
(22) Date of filing: 04.05.1995
(51) Int. Cl.: C08F 4/48, C08F 36/04, C08F 297/02

(54) **Process for the preparation of industrially applicable difunctional anionic polymerization initiators and their use**
Verfahren zur Herstellung von industriell verwendbaren difunktionellen anionischen Polymerisationsinitiatoren und ihre Verwendung
Procédé de préparation d'initiateurs de polymérisation anioniques difonctionnels utilisables dans l'industrie et leurs utilisation

(30) Priority: 09.05.1994 EP 94201287
(43) Date of publication of application: 15.11.1995
(73) Proprietor: SHELL INTERNATIONALE RESEARCH MAATSCHAPPIJ B.V., 2596 HR Den Haag (NL)
(72) Inventor: Fayt, Roger Michel Andre, B-4000 Liege (BE); Van Der Steen, Frederik Hendrik, NL-1031 CM Amsterdam (NL); Teyssie, Philippe Jules, B-4000 Liege (BE); Walhof, Judith Johanna Berendina, NL-1031 CM Amsterdam (NL); Yu, Yi-Song, B-4000 Liege (BE)

(56) References cited:
- FR-A- 2 313 389
- US-A- 3 903 168

## Description

The present invention relates to a process for the preparation of industrially applicable difunctional anionic polymerization initiators and their use for the manufacture of block copolymers derived from at least a conjugated diene and a monovinylaromatic monomer. More in particular the present invention relates to a process for the preparation of α,ω-dilithiopolydienes, which can be used for the industrial anionic polymerization of monomers into substantially symmetrical block copolymers.

Especially block copolymers of the type ABA or CABAC, wherein B represents a predominantly poly(conjugated diene)block, A represents a predominantly poly(monovinylaromatic) block and C represents a predominantly poly(polar vinyl monomer)block, have shown a growing interest, while on the other hand the requirements to be met by such block copolymers with reference to their specified standard properties have become more and more stringent.

The preparation of dilithium organo compounds for the anionic polymerization of monovinylaromatic and/or conjugated diene monomers into block copolymers was known in principle from e.g. US patents Nos. 3,652,516; 3,734,973; 3,663,634; 3,694,516; 3,668,263; 3,903,168; 3,954,894; 4,039,593; 4,172,100; 4,182,818; 4,960,842; European patent applications Nos. 0316857 and 4132294 and from Macromolecules 5, 453-8 (1969); R.P. Foss et al, Macromolecules 12, 344-6 (1979); C.W. Kamienski et al, Curr. Appl. Sci. Med. Technol. 315-25 (1985); R.P. Foss et al, Macromolecules 10, 287-291 (1977); R.P. Foss et al, Macromolecules 12, 1210-1216 (1979); Polymer 23, 1953-9 (1982); T.E. Long et al, J. Polym. Sci. Part A, Polym. Chem. vol. 27, 4001-4012 (1989).

In particular from the US patent No. 3,663,634 the preparation of hydrocarbon soluble organodilithium polymerization initiators was known. Said preparation comprised intimately contacting lithium metal with at least one compound selected from the group consisting of polyaryl substituted ethylenes, hydrocarbon substituted and unsubstituted conjugated diolefins and vinyl substituted aromatic compounds containing only carbon and hydrogen atoms, in a solvent mixture comprising
(A) at least one solvent member selected from the group consisting of aliphatic, cycloaliphatic and aromatic hydrocarbons, and
(B) at least one solvent member selected from a group of aromatic ethers, aromatic thioethers and tertiary amines, and wherein the volume fraction of solvent component (A) in the mixture can range from 57.0 vol% to 92.0 vol% and wherein the volume fraction of solvent component (B) in the solvent mixture can range from 8.0 to 43.0 vol%.

As component (B) preferably anisole was proposed and as the polyaryl-substituted ethylene 1,1-diphenylethylene was proposed.

The preferred amount of anisole in the solvent mixture was indicated to be 15 vol% in combination with 85 vol% benzene.

From US patent 3,694,516 was known a method for the preparation of a solvated lithium metal adduct of at least one member selected from the group consisting of (a) conjugated polyene hydrocarbon monomers and in particular 1,3-butadiene or isoprene, (b) vinyl substituted aromatic hydrocarbon monomers and in particular styrene, (c) mixtures of (a) and (b), and (d) their slightly chain-extended oligomers, which comprised providing a solution, in an organic solvent which includes at least one member selected from volatile liquid inert strongly solvating dialkyl ethers, cyclic ethers and tertiary amines, of at least one di- or poly-lithio adduct selected from the aforesaid (a), (b), (c) and (d) groups, admixing said solution with at least one member selected from the group consisting of weakly solvating liquid ethers (e.g. anisole) and weakly solvating liquid tertiary amines, said weakly solvating compounds having a boiling point substantially higher than the boiling point of said strongly solvating compound, and evaporating from said mixture substantially all of said strongly solvating compound without substantial evaporation of said weakly solvating compound.

The preferred liquid hydrocarbon solvent was benzene.

In US patent No. 4,196,154 multifunctional lithium containing initiators were later on disclosed, which were soluble in hydrocarbon solvents and thus highly useful in the preparation of block copolymers aimed at.

Additional teachings regarding the use of multifunctional lithium based initiators could be found in e.g. US patents Nos. 4,201,729; 4,200,718; 4,205,016; 4,172,190 and 4,196,153. However, the disadvantage connected with the use of multifunctional lithium containing initiators, providing polymers having rather wide molecular weight distributions (1.1 or greater), still remained.

Additional techniques were proposed, such as the use of co-initiators such as lithium alkoxides or specific triamines such as pentamethyldiethylene triamine or combinations thereof to obtain butadiene containing block copolymers having molecular weight distributions down to 1.06. Similar polymers containing primarily isoprene did not become available at all, because isoprene appeared to be less easily polymerizable by anionic techniques compared to butadiene and even rapid polymer addition did not occur.

It has been generally appreciated by persons skilled in the art, that block copolymers of improved tensile strength are obtained if the block copolymer has a reduced molecular weight distribution. In particular, a triblock polymer of the formula styrene/isoprene/ styrene prepared by conventional coupling of monofunctional lithium initiated diblock copolymers was found to demonstrate significantly improved tensile strength for equivalent number average molecular weight polymers, if the molecular weight distribution (Mw/Mn) is 1.03 instead of 1.20, L.C. Case, Makromol. Chem. V. 37, p 243 (1960).

Therefore there is still a need for block copolymers of monovinylaromatic monomer and conjugated diene, having the presently required physical properties and hence a related appropriate molecular weight distribution.

According to the disclosure of the European patent application No. 0316.857 it was tried to produce the block copolymers aimed at by means of a process, using a very specific diinitiator organolithium compound and a specific organic diamine or triamine.

Especially against the use of such amines on an industrial scale, objections arose with reference to environmental and health safety aspects.

From the European patent application No. 0413.294 it was known to produce narrow molecular weight distribution block copolymers (Mw/Mn in the range from 1.027 to 1.058) of the formula B-B'-X-(B'-B) or A-B-B'-X-(-B'BA) wherein A was a block of a non elastomeric monomer, B is a block of isoprene, B' is a block of butadiene and X is the remnant of a hydrocarbon soluble difunctional lithium initiator, said block copolymer having a molecular weight distribution (Mw/Mn) of less than 1.06.

As difunctional lithium based initiator were specified 1,3- or 1,4-phenylene bis(3-methyl-1-phenylpentylidene) bislithium or 1,3- or 1,4-phenylene bis(3-methyl-1-(4-methyl)phenylpentyliydene) bislithium.

Moreover the polymerization was conducted in the presence of an aliphatic triamine.

Although the use of dilithio initiators for the preparation of symmetrical block copolymers having an appropriate narrow molecular weight distribution had been disclosed in principle for a long time, up to now no actual commercial polymerization process has been carried out with the use of said initiators, due to an inevitably occurring too high vinyl content in the poly(conjugated diene) blocks caused by the copresence of a polar compound such as amines or ethers.

It will be appreciated that symmetrical block copolymers aimed at, can in principle be manufactured by coupling of living initially prepared intermediate block copolymers with a multifunctional and in particular difunctional coupling agent.

However a disadvantage of such coupling process was formed by the presence in the final block copolymer of a usually difficultly controllable amount of diblock copolymer, formed from the intermediate living polymer.

Another alternative preparation route of such symmetrical block copolymers comprises the fully sequential polymerization by using a monofunctional organolithium initiator optionally in combination with a second initiation to provide a predetermined controlled amount of diblock copolymer.

However, a problem of said full sequential polymerization process is caused by a relatively broad molecular weight distribution of the block segment, due to a relatively difficult initiation of the last monomer charge.

It will be appreciated that an industrial process for the preparation of symmetrical block copolymers, and in particular symmetrical triblock copolymers, which show an acceptable molecular weight distribution in combination with a relatively low vinyl content in the poly(conjugated diene) blocks due to 1,2 or 3,4 polymerization, which could meet the requirements of modern end uses of said block copolymers, by the use of a difunctional organolithium initiator, may provide significant advantages such as shorter polymerization times.

An object of the present invention was therefore to provide a suitable difunctional organolithium initiator. Additional objects of the present invention were to provide an attractive industrial process for the preparation of symmetrical block copolymers as specified hereinbefore and to provide a process for the preparation of such initiators.

As a result of extensive research and experimentation such a difunctional organolithium initiator aimed at was surprisingly found.

Accordingly one aspect of the present invention relates to a process for the preparation of an efficient industrial organolithium diinitiator, comprising the reaction of two equivalents mono-organolithium initiator with 1,3-diisopropenylbenzene at a temperature in the range of from -20 to 60 °C in an apolar hydrocarbon solvent and optionally in the presence of a tertiary amine in a molar ratio range relative to mono-organolithium of from 0.1 to 10, followed by addition to the reaction mixture of a small amount of conjugated diene monomer and at least 15 vol% of an aromatic ether activator relative to the total solvent volume optionally mixed with an alkoxy lithium compound, having from 1 to 10 carbon atoms, at a temperature in the range of from 0 to 30 °C, to form a solution of an α,ω-dilithio poly(conjugated diene) having an apparent molecular weight in the range of from 500 to 4000, as determined by gel permeation chromotography using polystyrene standard calibration polymers.

As mono-organolithium initiator is preferably used sec.butyllithium or tert.butyllithium, the former of which is most preferred.

The reaction temperature during the reaction of 1,3-diisopropenylbenzene with the mono-organolithium initiator is preferably in the range of from -10 to 50 °C and more preferably in the range of from 10 to 30 °C.

The apolar hydrocarbon solvent was found to be preferably selected from cycloalkanes, having from 5 to 8 carbon atoms and more preferably having 5 or 6 carbon atoms.

Also mixtures of such cycloalkanes or mixtures of predominant amounts of such cycloalkanes and minor amounts of aliphatic hydrocarbons having from 5 to 8 carbon atoms can be used, but the use of pure cyclohexane or cyclopentane was found to be most preferred.

Aromatic ether activators, which may suitably be used for the hereinbefore specified process, may be selected from anisole, diphenylether and/or derivatives thereof wherein at least one phenyl ring has been substituted by one or more lower alkyl groups or alkoxy groups, containing from 1 to 3 carbon atoms and preferably from 1 to 2 carbon atoms.

The optionally used alkoxylithium compound has preferably from 3-6 carbon atoms and more preferably 4 carbon atoms and most preferably tert butoxy lithium is used. The alkoxylithium compound is added in a concentration of from 0.5 to 5 mole equivalent per equivalent lithium already present.

The amount of said aromatic ether activator to be applied in the reaction medium is at least 15 vol% and in particular in the range of from 15 to 40 vol%. More preferably amounts of aromatic ether activator in the range of from 15 to 25 vol% are used.

The optionally used tertiary amine is applied if any, in a molar ratio range relative to mono-organo-lithium of preferably from 0.5 to 2.

The conjugated diene monomer to be added in small amounts to the reaction medium can be selected from butadiene, isoprene, 2-ethyl-1,3-butadiene, 2,3-dimethyl-1,3-butadiene and 1,3-pentadiene or mixtures thereof.

As conjugated diene is preferably used the same conjugated diene as those which constitute later on the poly(conjugated diene) block(s) in the final block copolymer.

The apparent molecular weight of the prepared α,ω-dilithio initiator is preferably in the range of from 1000 to 3000 and more preferably from 1500 to 2300.

It was surprisingly found that stable, hydrocarbon solvent soluble α,ω-dilithio initiators could be obtained by addition of a small amount of a conjugated diene monomer and an amount of aromatic ether activator which appeared to influence the stereochemistry of the diene polymerization in an acceptable minimal degree during the subsequent use of the initiator for the preparation of the final block copolymer (vinyl content was found to be at most 18%).

It will be appreciated that another aspect of the present invention is formed by the reaction product solutions, comprising the stable α,ω-dilithio initiator dissolved in the hydrocarbon solvent-aromatic ether activator medium, as such or optionally diluted with the hereinbefore specified hydrocarbon solvent(s) to achieve the desired concentration of the α,ω-dilithio initiator prepared, to which have been optionally added one or more of the monomers to be incorporated into the finally desired block copolymers.

A further aspect of the present invention is formed by a process for the preparation of symmetrical block copolymers derived from monovinylaromatic monomers, conjugated dienes and optionally additional polar vinyl monomers having the required combination of narrow molecular weight distribution (Mw/Mn ≤ 1.20) and relatively low vinyl content (≤ 18%) of the predominantly poly(conjugated diene) blocks, by anionic polymerization, using the hereinbefore specified α,ω-dilithio initiator solution.

Preferably the symmetrical block copolymers prepared by the hereinbefore mentioned process show a Mw/Mn ≤ 1.10.

More in particular a process is provided for the preparation of linear block copolymers constituted by conjugated diene, monovinylaromatic monomer and optionally a polar vinyl monomer of the structure ABA, ABCBA, CBC, ACBCA or CABAC respectively, wherein A represents a predominantly poly(monovinylaromatic) block, B represents a predominantly poly(conjugated diene) block and C represents a predominantly poly(polar vinyl) block.

Accordingly the present invention also relates to a process, comprising:
(1) charging a predominantly conjugated diene monomer as specified hereinbefore to the α,ω-dilithio initiator solution described hereinbefore and allowing essentially complete polymerization; thereafter
(2) charging a predominantly monovinylaromatic monomer or a predominantly polar vinyl monomer after introduction of an end-capping and addition of a polar solvent such as ether and allowing essentially complete polymerization; and optionally
(3) introduction of a reagent for introduction of an end-capping of the living polymers and introduction of a polar cosolvent such as an ether and charging a predominantly polar vinyl monomer, and allowing essentially complete polymerization.

It will be appreciated by a person skilled in the art that the said process will preferably be carried out under an inert gas atmosphere and preferably nitrogen gas.

With the terms "predominantly conjugated diene" and "predominantly polar vinyl compound" as used throughout this specification, is meant that the indicated monomer may be substantially pure or mixed in a minor degree with a structurally related monomer or with a structurally different monomer and preferably the same comonomer, which occurs in other block segments, i.e. in amounts of less than 15 mol% of the total monomers of said blocks and preferably less than 5 mol%.

Suitable examples of monomer mixtures constituting the blocks A are mixtures of styrene and minor amounts of monomers selected from the group consisting of alpha-methylstyrene, p-vinyltoluene, m-vinyl toluene, o-vinyltoluene, 4-ethylstyrene, 3-ethylstyrene, 2-ethylstyrene, 4-tert.butylstyrene, 2,4-dimethylstyrene, 2 or 4-vinylpyridine butadiene, isoprene, 2-ethyl-1,3-butadiene, 2,3-dimethyl-1,3-butadiene and 1,3-pentadiene or mixtures thereof.

Suitable examples of monomer mixtures constituting block B are mixtures of isoprene or butadiene and minor amounts of monomers selected from styrene, alpha-methylstyrene, p-vinyltoluene, m-vinyltoluene, o-vinyltoluene, 4-ethylstyrene, 3-ethylstyrene, 2-ethylstyrene, 4-tert.butylstyrene, 2,4-dimethylstyrene, butadiene or isoprene, 2-ethyl-1,3-butadiene, 2,3-dimethyl-1,3-butadiene and 1,3-pentadiene or mixtures thereof.

Preferably the constituting monomers of blocks A are mixtures of styrene in a major amount and structurally related monomers as specified hereinbefore in a minor amount and preferably alphamethylstyrene, while the constituting monomers of block B are selected from butadiene, isoprene and mixtures thereof.

Suitable examples of monomer mixtures constituting optional blocks C are mixtures of a major component selected from lower alkyl (C₁-C₄) esters of acrylic acid or methacrylic acid such as tert.butylacrylate, tert.butylmethacrylate, methylacrylate, methylmethacrylate, or esters or anhydrides of maleic acid, fumaric acid, itaconic acid, cis-4-cyclohexene-1,2-dicarboxylic acid, endocis-bicyclo(2,2,1)-5-heptene-2,3-dicarboxylic acid or mixtures thereof, 2- or 4-vinylpyridine and as a minor component a comonomer selected from styrene, alpha-methylstyrene, p-vinyltoluene, m-vinyltoluene, o-vinyltoluene, 4-ethylstyrene, 3-ethylstyrene, 2-ethylstyrene, 4-tert.butylstyrene, 2,4-dimethylstyrene, butadiene or isoprene, 2-ethyl-1,3-butadiene, 2,3-dimethyl-1,3-butadiene and 1,3pentadiene or mixtures thereof.

Preferably optional blocks C have been derived from pure methylmethacrylate, methylacrylate, tert-butylmethacrylate or tert-butylacrylate, of which tert-butylmethacrylate or tert-butyl acrylate are most preferred.

Most preferably the blocks A, B and C are constituted by one substantially pure monomer.

It will be appreciated that in particular for the preparation of symmetrical linear block copolymers of the hereinbefore specified formula C-B-C and CA-B-A-C, an end capping reagent has to be used in step (3) just before the start of the polymerisation of the polar vinyl monomer and more preferably methyl methacrylate or tert-butylmethacrylate monomer. More preferably such end capping reagent is selected from the group consisting of diphenylethylene and α-methylstyrene and is added, in at least a four fold molar excess before addition of the polar vinyl monomer to be incorporated into the block copolymer. Of the hereinbefore specified end capping reagents diphenyl ethylene is preferred.

The polymerisation of the polar vinyl monomer and more in particular the acrylate or methacrylate, is normally performed at temperatures <25°C and more preferably in the range of from -65 to -80°C and in the presence of a polar cosolvent such as an ether, and preferably THF, in an amount of at most 50 vol%, relative to total solvent volume.

It will be appreciated that according to a preferred process embodiment, the main solvent used for initial preparation of α,ω-dilithio initiator and the main solvent used during the actual block copolymer polymerization is the same, although it is not strictly necessary.

A further aspect of the present invention is formed by a class of block copolymers, obtainable by the hereinbefore specified process and characterized by the combination of a narrow molecular weight distribution (Mw/Mn ≤ 1.20) and a relatively low vinyl content of the predominantly poly(conjugated diene)blocks (≤ 18%).

Preferred block copolymers according to the present invention are linear triblock or five block copolymers derived from styrene, butadiene or isoprene and/or a lower alkyl ester of acrylic acid or methacrylic acid respectively as pure block constituents and showing a Mw/Mn ratio ≤ 1.10.

The symmetrical linear block copolymers containing terminal endblocks, derived from a polar vinyl monomer and in particular selected from methylacrylate, methylmethacrylate, tert butylacrylate, tert-butylmethacrylate and according to formula C-A-B-A-C, have been found to a show a surprisingly improved tensile strength, permanent set at break, modulus at 300% elongation, and temperature behaviour, as compared to those corresponding properties of presently available ABA block copolymers, in the case of relatively short poly(polar vinyl monomer) endblocks, i.e. the total bound polar vinyl monomer content is ≤ 30 wt%, relatively to the weight of the total block copolymer, and preferably <15 wt% when tert butylmethacrylates is used and more preferably in the range of from 3 to 9 wt%.

Suitable poly(polar vinyl monomer) blocks in these symmetrical linear block copolymers have apparent molecular weights in the range of from 3000 to 15000 and preferably from 3500 to 5500, relative to a total block copolymer molecular weight in the range of from 80,000 and 180,000.

Said block copolymers show a tensile strength of at least 25 MPa and usually more than 30 MPa, which may be 30% higher than the conventional thermoplastic elastomers A-B-A. The temperature behaviour of the block copolymers is also improved as compared to the usual A-B-A based polymers. A service temperature of C-A-B-A-C block copolymers, having a content of polar vinyl monomer, selected from methylacrylate, methylmethacrylate, tert-butylacrylate and tert-butylmethacrylate of around 8 wt%, increases up to 20-30°C higher than conventional A-BA triblock copolymers (giving a service temperature of at least 80°C).

Permanent set at break of A-B-A has been found improved in C-A-B-A-C block copolymers having short PMMA blocks (decreasing from 25% to 20% or lower). The modulus at 300% extension was found to increase up to 10 MPa.

The present invention also relates to linear five block copolymers derived from styrene, butadiene and tert-butyl methacrylae as pure constituents.

A further aspect of the present invention is formed by the hereinbefore specified symmetrical linear block copolymers C-A-B-A-C or C-B-C, wherein the C blocks have been completely or partially hydrolysed (residual ester content of < 10 mol%).

In particular said hydrolysed CA-B-A-C block copolymers wherein C is preferably tert butyl methacrylate block, were found to possess improved mechanical properties. For example the tensile strength is significantly enhanced at relatively low acid contents, whereas the tensile strength decreases upon further increasing the acid content. The preferred residual ester content is ≤ 10 mol%, relative to the original ester group content.

Hydrolysis of the methacrylate or acrylate blocks and more in particular tert butyl methacrylate blocks may be performed by methods known in the art and preferably at a temperature of from 130 to 150°C under an inert gas and preferably nitrogen, in an aromatic solvent such as toluene, and benzene, and a catalytic amount of a strong sulphonic acid such as methanesulfonic acid, at a concentration of from 1 to 3 wt%, relative to the weight of the polymer. Such a hydrolysis up to a residual ester content of ≤ 10 mole %, was found not to affect the central block structure.

The invention is illustrated by the following examples.

### EXAMPLE 1

### Reaction of BuLi with 1,3-diisopropenyl benzene

### Procedure A

To a stirred vessel, containing 20 ml of dry cyclohexane were added 1.87 mmoles of s-BuLi (7.2 ml of a 0.26 molar solution in hexanes). To the solution were added 0.93 mmoles of 1,3-diisopropenylbenzene (4.8 ml of a 0.194 molar solution in cyclohexane) at room temperature. Immediately a dark red colour developed and the reaction was continued for 2 hours at 50 °C.

### Procedure B

To a stirred vessel, containing 200 ml of dry cyclohexane, 0.68 g (6 mmoles) of triethylamine were added. Subsequently, 6 mmoles of s-BuLi (3.2 g of a 12 wt% solution in hexanes) and 0.48 g (3 mmoles) of 1,3-diisopropenylbenzene were added at room temperature. The reaction was continued for 2 hours at room temperature, leading to a dark red solution.

### Procedure C

To a stirred vessel, containing 200 ml of dry cyclohexane was added 0.68 g (6 mmoles) of triethylamine. Subsequently, 6 mmoles of t-BuLi (5 ml of a 1.2 molar solution in hexanes) and 0.48 g (3 mmoles) of 1,3-diisopropenylbenzene were added at 0 °C. The reaction was continued for 1 hour.

### EXAMPLE 2

### Preparation of α,ω-dilithiopolybutadiene

### Procedure A

To the solution obtained by procedure A of Example 1 1.86 g of butadiene and 5.7 ml (15 vol%) of dry anisole were added at 0 °C. The dark red colour rapidly changed to a light orange and the solution became pale yellow after stirring overnight. This solution was used as stock for polymerization experiments with a concentration of α,ω-dilithiopolybutadiene (MW = 2300) of 0.025 molar.

### Procedure B

To the solution obtained by procedure B of Example 1 5.8 g of butadiene and 10 ml (15 vol%) of dry anisole were added at 0 °C. The dark red colour rapidly changed to a light orange and became pale yellow after stirring overnight. This solution was used as stock for polymerization experiments with a concentration of α,ω-dilithiopolybutadiene (MW = 2100) of 0.015 molar.

### Procedure C

To the solution obtained by procedure C of Example 1, 5.8 g of butadiene and 10 ml (15 vol%) of dry anisole were added at 0 °C. The dark red colour rapidly changed to a light orange and became pale yellow after stirring overnight. This solution was used as stock for polymerization experiments with a concentration of α,ω-dilithiopolybutadiene (MW = 2100) of 0.015 molar.

### Procedure D

This procedure was carried out in the same way as procedure C of example II, excepted that 1 mol equivalent tert butoxylithium was added per mole equivalent lithium already present before the addition of the butadiene.

### EXAMPLE 3

### Synthesis of SBS blockcopolymers with α,ω-dilithiopolybutadiene A

To a reactor, charged with 1 l of dry cyclohexane, were added a few drops of α,ω-dilithiopolybutadiene A to titrate the solution.

Thereafter the reactor was charged with 36 g of butadiene and 24 mi of solution A (containing 0.6 mmol diinitiator) at room temperature. The temperature was allowed to rise to 40 °C and polymerization continued for 10 hours at 40 °C. A sample was withdrawn for analysis. The polybutadiene showed the following characteristics: peak MW 70000 g/mol, Mw/Mn = 1.10 and a vinyl content of 15%. To the reactor were then added 17 g of styrene and polymerization was continued for 2 hours at 40 °C. To the solution was added 1 ml of methanol to terminate the polymerization. The recovered triblock copolymer was stabilized with antioxidant and had the following characteristics: peak MW 102000 g/mol, Mw/Mn = 1.15. A sample was subjected to ozonolysis to leave PS with peak MW 15000 g/mol. A compression moulded sample had a Tensile Strength of 16 MPa and an Elongation at break of 1800%.

### EXAMPLES 4-6

Following the procedure of Example 3, three other SBS triblock copolymers were prepared with the characteristics as shown in Table I.

| Sample | MW PB | MW PS^{a} | M_{w}/Mₙ | vinyl % | PS (ozone) |
|---|---|---|---|---|---|
| 4 | 100000 | 13000 | 1.10 | 13 | 14000 |
| 5 | 75000 | 13000 | 1.12 | 15 | 15000 |
| 6 | 70000 | 13000 | 1.15 | 15 | 17000 |

| | | | | | |
|---|---|---|---|---|---|
| ^{a} Calculated from GPC and ¹H NMR, assuming a triblock structure. | | | | | |

### EXAMPLE 7

### Synthesis of SBS blockcopolymers with α, ω-dilithiopolybutadiene B

To a polymerization bottle, charged with 250 ml of dry cyclohexane, a few drops of α,ω-dilithiopolybutadiene B were added to titrate the solution. Thereafter the bottle was charged with 12 g of butadiene and 11 ml of solution B (containing 0.17 mmol diinitator) at room temperature. The temperature was allowed to rise to 60 °C and polymerization continued for 2 hours at 60 °C. A sample was withdrawn for analysis. The polybutadiene showed the following characteristics: peak MW 83000 g/mol, Mw/Mn = 1.10 and a vinyl content of 11%. To the bottle were then added 6 g of styrene and polymerization was continued for 30 min at 60 °C. To the solution was added 1 ml of methanol to terminate the polymerization. The recovered triblock copolymer was stabilized with antioxidant and had the following characteristics: peak MW 115000 g/mol, Mw/Mn = 1.18. A sample was subjected to ozonolysis to leave PS with peak MW 18000 g/mol. A compression moulded sample had a Tensile Strength of 13 MPA and an Elongation at break of 1800%.

### EXAMPLE 8

Following the procedure of Example 7, another SBS triblock copolymer was prepared with the following characteristics: peak MW PB 82000 g/mol, M_{w}/Mₙ = 1.12 and a vinyl content of 11%; peak MW SBS 116000, M_{w}/Mₙ = 1.19. MW PS after ozonolysis 17000. Tensile Strength 17 MPA. Elongation at break 1900.

### EXAMPLE 9

### Synthesis of SBS blockcopolymers with α, ω-dilithiopolybutadiene C

To a reactor, charged with 1 l of dry cyclohexane, a few drops of α,ω-dilithiopolybutadiene C were added to titrate the solution. Thereafter the reactor was charged with 36 g of butadiene and 40 ml of solution C (containing 0.6 mmol diinitiator) at room temperature. The temperature was allowed to rise to 40 °C and polymerization continued for 10 hours at 40 °C. A sample was withdrawn for analysis. The polybutadiene had the following characteristics: peak MW 70000 g/mol, Mw/Mn = 1.15 and a vinyl content of 16%. To the reactor were then added 14 g of styrene and polymerization was continued for 2 hours at 40 °C. To the solution was added 1 ml of methanol to terminate the polymerization. The recovered triblock copolymer was stabilized with antioxidant and had the following characteristics: peak MW 96000 g/mol, Mw/Mn = 1.20. A sample was subjected to ozonolysis to leave PS with peak MW 14000 g/mol. A compression moulded sample had a Tensile Strength of 15 MPA and an Elongation at break of 1400%.

### EXAMPLES 10 (Comparative)-11

Following the procedure of Example 9, two other SBS triblock copolymers were prepared with the characteristics as shown in Table II:

| Sample | MW PB | MW PS^{a} | M_{w}/Mₙ | vinyl % | Tensile (MPa) | Elong. (%) | PS (ozon) |
|---|---|---|---|---|---|---|---|
| 10 | 65000 | 13000 | 1.25 | 16 | 22.5 | 1400 | 14000 |
| 11 | 80000 | 18000 | 1.15 | 18 | 17.5 | 1400 | 20000 |

| | | | | | | | |
|---|---|---|---|---|---|---|---|
| ^{a} Calculated from GPC and ¹H NMR, assuming a triblock structure. | | | | | | | |

### EXAMPLES 12 TO 13

Following the procedure of example 9 two SBS triblock copolymers were prepared using a solution obtained by procedure D of example II. The characteristics have been listed in Table III:

| Sample | Mw PB | Mw PS^{a} | Mw/Mn | vinyl % | Tensile strength | Elong at break |
|---|---|---|---|---|---|---|
| 12 | 72000 | 16000 | 1.10 | 15.5 | 25.0 | 1000 |
| 13 | 72000 | 16000 | 1.10 | 15.0 | 30.0 | 1000 |

### EXAMPLES 14-16

### Synthesis of PMMA-SBS-PMMA and PTBMA-SBS-PTBMA block copolymers with α, ω-dilithiopolybutadiene A

A solution of living Li-SBS-Li triblock copolymer was prepared using the procedure of Example 3, after completion of the styrene polymerization, 12 ml of a 0.5 molar of diphenylethylene solution in cyclohexane were added. The end-capping reaction was continued for 30 min at room temperature. Then the red solution is cooled to 0 °C and 1 l of dry tetrahydrofuran is added and the solution cooled to -78 °C. At this temperature 2.4 g of methyl methacrylate or tertiary butyl methacrylate were introduced giving a clear colourless solution. The polymerization was continued for 30 min and then 1 ml of methanol was introduced to terminate the polymerization. The recovered polymers were stabilized with antioxidant and showed the characteristics as shown in Table IV:

| Sample | PB | vinyl % | PS^{a} | PMMA^{a}PTBMA | M_{w}/Mₙ | Tensile strength MPa | Elongation at break % |
|---|---|---|---|---|---|---|---|
| 12^{b} | 69000 | 16 | 12000 | 2000 | 1.16 | 17.8 | 1500 |
| 13^{b} | 79000 | 15 | 14000 | 3000 | 1.12 | 19.5 | 1800 |
| 14^{c} | 120000 | 14 | 21000 | 4000 | 1.17 | 21.8 | 1700 |

| | | | | | | | |
|---|---|---|---|---|---|---|---|
| ^{a} Calculated from GPC and ¹H NMR, assuming a tri-/fiveblock structure. | | | | | | | |
| ^{b} With methyl methacrylate. ^{c} With tertiary butyl methacrylate. | | | | | | | |

### EXAMPLES 17-18

### Synthesis of PMMA-SBS-PMMA and PTBMA-SBS-PTBMA block copolymers with α, ω-dilithiopolybutadiene C

Following the same procedure as described in Examples 14-16 a PMMA-SBS-PMMA and a PTBMA-SBS-PTBMA block copolymers were synthesized with α,ω-dilithiopolybutadiene C. The characteristics are shown in Table V:

| Sample | PB | vinyl % | PS^{a} | PMMA^{a} PTBMA | M_{w}/Mₙ | Tensile (MPa) | Elongation (%) |
|---|---|---|---|---|---|---|---|
| 15^{b} | 70000 | 16 | 11000 | 4000 | 1.15 | 25 | 1400 |
| 16^{c} | 70000 | 16 | 11000 | 4000 | 1.15 | 22 | 1400 |

| | | | | | | | |
|---|---|---|---|---|---|---|---|
| ^{a} Calculated from GPC and ¹H NMR, assuming a tri-/fiveblock structure. | | | | | | | |
| ^{b} With methyl methacrylate. | | | | | | | |
| ^{c} With tertiary butyl methacrylate. | | | | | | | |

### EXAMPLES 19-22

Following the same procedure as described in Examples 14-16 PMMA-SBS-PMMA block copolymers were synthesised with α,ω-dilithiopolybutadiene obtained in procedure D in Example 2.

The resulting block copolymers were stabilised with antioxidant and had the characteristics, as listed in Table VI:

| Sample | PB | vinyl % | PS^{a} | PMMA | Mw/Mn | Tensile strength (MPa) | Elongation at break | Permanent set |
|---|---|---|---|---|---|---|---|---|
| 19 | 60000 | 11 | 12000 | 4000 | 1.10 | 35 | 1000 | 20 |
| 20 | 60000 | 16 | 2000 | 14000 | 1.10 | 30.5 | 1000 | 18 |
| 21 | 60000 | 15 | 4000 | 12000 | 1.10 | 35.5 | 1000 | 18 |
| 22 | 60000 | 17 | 12000 | 5000 | 1.10 | 38.5 | 1000 | 17 |

### EXAMPLES 23-24

### Synthesis of PMMA-B-PMMA block copolymers with α,ω-dilithiopolybutadiene C

Following the same procedure as described in Examples 14-16 two PMMA-B-PMMA block copolymers were synthesized with α,ω-dilithiopolybutadiene C. The characteristics are shown in Table VII:

| Sample | PB | vinyl % | PMMA^{a} | PMMA (ozon) | M_{w}/Mₙ | Tensile (MPa) | Elongation (%) |
|---|---|---|---|---|---|---|---|
| 17 | 85000 | 16 | 25000 | 28000 | 1.20 | 19 | 1000 |
| 18 | 75000 | 17 | 22000 | 23000 | 1.20 | 19 | 1000 |

| | | | | | | | |
|---|---|---|---|---|---|---|---|
| ^{a} Calculated from GPC and ¹H NMR, assuming a triblock structure. | | | | | | | |

### EXAMPLES 25-26

Following the same procedure as described in Examples 14-16, PMMA-B-PMMA block copolymers were synthesised with α,ω-dilithiopolybutadiene obtained in procedure D in Example 2.

The resulting block copolymers were stabilised with antioxidant and had the characteristics as listed in Table VIII:

| Sample | PB | vinyl % | PMMA | Mw/Mn | tensile strength (MPa) | Elongation at break | permanent set |
|---|---|---|---|---|---|---|---|
| 25 | 80,000 | 16 | 2100 | 1.10 | 23.8 | 1000 | 17 |
| 26 | 80,000 | 17 | 3100 | 1.10 | 26.2 | 700 | 17 |

### Comparative Examples

### EXAMPLES 27-30

### Inefficiency of the s-BuLi/1,3-DIB adduct

The adduct of s-BuLi and 1,3-diisopropenylbenzene was prepared following the procedure A of Example 1. With the resulting solution, several polymerizations have been carried out as shown in Table IX:

| Sample | MW PB | MW PS^{a} | M_{w}/Mₙ | Tensile (MPA) | Elong. (%) | PS (ozon) |
|---|---|---|---|---|---|---|
| 27 | 10000 | 18000 | 1.30 | too weak | - | 40000 |
| 28 | 20000 | 18000 | 1.30 | too weak | - | 40000 |
| 29 | 55000 | 25000 | 1.25 | too weak | - | 45000 |
| 30 | 70000 | 13000 | 1.20 | 0.6 | 200 | 30000 |

| | | | | | | |
|---|---|---|---|---|---|---|
| ^{a} Calculated from GPC and ¹H NMR, assuming a triblock structure. | | | | | | |

### EXAMPLES 31-32, 34, 33 (Comparative)

### The inefficiency of the s-BuLi/1,3-DIB adduct in the presence of triethylamine

The adduct of s-BuLi and 1,3-diisopropenylbenzene was prepared following the procedure A of Example 1, with the modification that different amounts of triethylamine have been added. With the resulting solutions, several polymerizations have been carried out as shown in Table X:

| Sample | Ratio EtN₃/Li | MW PB | MW PS^{a} | M_{w}/Mₙ | Vinyl (%) | Tensile (MPa) | Elong (%) | PS (ozon) |
|---|---|---|---|---|---|---|---|---|
| 31 | 0.1 | 70000 | 13000 | 1.20 | 15.5 | 0.9 | 60 | 31000 |
| 32 | 1.0 | 85000 | 12000 | 1.20 | 15.5 | 1.1 | 100 | 25000 |
| 33 | 3.0 | 95000 | 15000 | 1.25 | 16.5 | 1.0 | 90 | 30000 |
| 34 | 10.0 | 95000 | 16000 | 1.20 | 16.5 | 1.5 | 50 | 30000 |

| | | | | | | | | |
|---|---|---|---|---|---|---|---|---|
| ^{a} Calculated from GPC and ¹H NMR, assuming a triblock structure. * The modified procedures were according to the hereinbefore referred Kamienski and Foss publications, e.g. US patent No. 3,903,168. | | | | | | | | |

### EXAMPLES 35-36, 38-39, 37 (Comparative)

### Polymerizations with α, ω-dilithiopolybutadiene in the presence of polar additives

An α,ω-dilithiopolybutadiene was prepared following the procedure B of Example 2, with the modification that other polar additives than anisole are added. With the resulting solutions, several polymerizations have been carried out as shown in Table VIII:

| Sample | Additive (vol%) | MW PB | MW PS^{a} | M_{w}/Mₙ | Vinyl (%) | Tensile (MPa) | Elong (%) | PS (ozon) |
|---|---|---|---|---|---|---|---|---|
| 35 | Et₃N(12) | 86000 | 22000 | 1.19^{b} | 15.0 | | | 29000 |
| 36 | Et₂O(15) | 77000 | 15500 | 1.28^{b} | 18.0 | | | 16000 |
| 37* | MTBE(10) | 75000 | 14000 | 1.34 | 16.0 | 2.5 | 700 | |
| 30* | MTBE(15) | 82000 | 13000 | 1.20 | 33.0 | 21.8 | 1700 | 14000 |
| 39* | TMEDA^{c} | 77000 | 18000 | 1.15 | 39.0 | | | 19500 |

| | | | | | | | | |
|---|---|---|---|---|---|---|---|---|
| ^{a} Calculated from GPC and ¹H NMR, assuming a triblock structure. | | | | | | | | |
| ^{b} Bimodal distribution. | | | | | | | | |
| ^{c} Ratio TMEDA/Li = 0.34. | | | | | | | | |
| * It will be appreciated that in these samples the vinyl content was too high. | | | | | | | | |

## Claims

1. A process for the preparation of an efficient industrial organolithium diinitiator, comprising the reaction of two equivalents mono-organolithium initiator with 1,3-diisopropenyl benzene at a temperature in the range of from -20° to 60 °C in an apolar hydrocarbon solvent, and optionally in the presence of a tertiary amine in a molar ratio range relative to mono-organolithium of from 0.1 to 10, followed by the addition to the reaction mixture of a small amount of conjugated diene monomer and at least 15 vol% of an aromatic ether activator relative to the total solvent volume, optionally mixed with an alkoxylithium compound having from 1 to 10 carbon atoms, at a temperature in the range of from 0 to 30 °C, to form a solution of an α,ω-dilithio poly(conjugated diene) initiator, having an apparent molecular weight in the range of from 500 to 4000, as determined by gel permeation chromatography using polystyrene standard calibration polymers.

2. A process according to claim 1, characterized in that as mono-organolithium initiator is used sec-butyllithium or tert-butyllithium.

3. A process according to claim 1, characterized in that the reaction of 1,3-diisopropylbenzene with the monoorganolithium initiator is in the range of from 10 to 30 °C.

4. A process according to claim 1, characterized in that the apolar hydrocarbon solvent is selected from cycloalkanes, having from 5 to 8 carbon atoms.

5. A process according to claim 1, characterized in that the aromatic ether activators are selected from anisole, diphenylether and/or derivatives thereof wherein at least one phenyl ring has been substituted by one or more alkyl groups or alkoxy groups containing from 1 to 3 carbon atoms.

6. A process according to claims 1-5, characterised in that an alkoxylithium compound is used having 3 to 6 carbon atoms and in a concentration of from 0.5 to 5 mole equivalent per equivalent lithium already present.

7. A process according to claims 1-6, characterized in that the amount of the aromatic ether activator to be applied in the reaction medium is in the range of from 15 to 40 vol%.

8. A process according to claim 7, characterized in that the amount of the aromatic ether activator is in the range of from 15 to 25 vol%.

9. A process according to claims 1-8, characterized in that the conjugated diene is used in small amounts to the reaction medium is butadiene or isoprene.

10. A process according to claim 7, characterized in that the apparent molecular weight of the prepared α,ω-dilithio initiator is in the range of from 1500 to 2300.

11. Reaction product solutions, comprising the stable α,ω-dilithio initiator dissolved in a hydrocarbon solvent-aromatic ether activator medium as obtainable according to the process according to claims 1-10.

12. Process for the preparation of symmetrical block copolymers, derived from monovinyl aromatic monomers conjugated dienes and optionally additionally polar vinyl monomers, having a combination of a narrow molecular weight distribution (Mw/Mn ≤ 1.20) and relatively low vinyl content (≤ 18%) of the predominantly poly(conjugated diene) blocks, by anionic polymerization using the α,ω-dilithio initiator solution obtainable according to claims 1-11.

13. Process according to claim 12, characterized in that linear block copolymers constituted by monovinylaromatic monomer, conjugated diene and optionally a polar vinyl monomer of the structure ABA, ABCBA, CBC, ACBCA or CABAC respectively are prepared. comprising
(1) charging a predominantly conjugated diene monomer to the α,ω-dilithio initiator solution obtainable according to claims 1-11 and allowing essentially complete polymerization; thereafter
(2) charging a predominantly monovinylaromatic monomer or a predominantly polar vinyl monomer after introduction of an end-capping agent and addition of ether and allowing essentially complete polymerization; and optionally
(3) introduction of a reagent for introduction of an end-capping of the living polymers and introduction of an ether and charging a predominantly polar vinyl monomer, and allowing essentially complete polymerization.

14. Process according to claim 13, characterised in that in step 3 diphenylethylene is used as end-capping reagent.

15. Symmetrical block copolymers, obtainable by the process according claims 12-14, characterized by the combination of a narrow molecular weight distribution (Mw/Mn ≤ 1.20), a relatively low vinyl content of the predominantly poly(conjugated diene) blocks (≤ 18%).

16. Block copolymers according to claim 15, characterised in that they are linear five block copolymers, derived from styrene, butadiene and tert-butyl methacrylate as pure block constituents.

17. Symmetrical linear block copolymers according to claims 15-16, characterised in that the blocks C have been completely or partially hydrolysed (residual ester content of ≤70 mol%).

## Patentansprüche

1. Verfahren zur Herstellung eines effizienten industriellen Organolithiumdiinitiators, umfassend die Umsetzung von zwei Äquivalenten Monoorganolithiuminitiator mit 1,3-Diiso-propenylbenzol bei einer Temperatur im Bereich von -20 bis 60°C in einem apolaren Kohlenwasserstofflösungsmittel und gegebenenfalls in Anwesenheit eines tertiären Amins in einem Molverhältnis gegenüber Monoorganolithium von 0,1 bis 10, gefolgt von einer Zugabe einer kleinen Menge an konjugiertem Dienmonomer und von wenigstens 15 Vol.-% eines aromatischen Etheraktivators, bezogen auf das gesamte Lösungsmittelvolumen, gegebenenfalls im Gemisch mit einer Alkoxylithiumverbindung mit 1 bis 10 Kohlenstoffatomen, zum Reaktionsgemisch bei einer Temperatur im Bereich von 0 bis 30°C zur Ausbildung einer Lösung eines α, ω-Dilithio-poly(konjugiertes Dien) mit einem scheinbaren Molekulargewicht im Bereich von 500 bis 4.000, bestimmt durch Gelpermeationschromatographie unter Verwendung von Polystyrol-Standardeichpolymeren.

2. Verfahren nach Anspruch 1, dadurch gekennzeichnet, daß als Monoorganolithiuminitiator sek-Butyllithium oder tert.Butyllithium eingesetzt wird.

3. Verfahren nach Anspruch 1, dadurch gekennzeichnet, daß die Umsetzung von 1,3-Diisopropenylbenzol mit dem Monoorganolithiuminitiator bei einer Temperatur im Bereich von 10 bis 30°C ausgeführt wird.

4. Verfahren nach Anspruch 1, dadurch gekennzeichnet, daß das apolare Kohlenwasserstofflösungsmittel unter Cycloalkanen mit 5 bis 8 Kohlenstoffatomen ausgewählt wird.

5. Verfahren nach Anspruch 1, dadurch gekennzeichnet, daß die aromatische Etheraktivatoren unter Anisol, Diphenylether und/oder Derivaten hievon ausgewählt werden, worin wenigstens 1 Phenylring durch eine oder mehrere Alkylgruppen oder Alkoxygruppen mit 1 bis 3 Kohlenstoffatomen substituiert worden ist.

6. Verfahren nach den Ansprüchen 1 bis 5, dadurch gekennzeichnet, daß eine Alkoxylithiumverbindung mit 3 bis 6 Kohlenstoffatomen in einer Konzentration von 0,5 bis 5 Moläquivalenten pro bereits vorhandenem Lithiumäquivalent verwendet wird.

7. Verfahren nach den Ansprüchen 1 bis 6, dadurch gekennzeichnet, daß die Menge des im Reaktionsmedium anzuwendenden aromatischen Etheraktivators im Bereich von 15 bis 40 Vol % liegt.

8. Verfahren nach Anspruch 7, dadurch gekennzeichnet, daß die Menge des aromatischen Etheraktivators im Bereich von 15 bis 25 Vol.-% liegt.

9. Verfahren nach den Ansprüchen 1 bis 8, dadurch gekennzeichnet, daß das in kleinen Mengen zum Reaktionsmedium zugesetzte konjugierte Dien Butadien oder Isopren ist.

10. Verfahren nach Anspruch 7, dadurch gekennzeichnet, daß das scheinbare Molekulargewicht des hergestellten α,ω-Dilithio-initiators im Bereich von 1.500 bis 2.300 liegt.

11. Reaktionsproduktlösungen, umfassend den stabilen α,ω-Dilithioinitiator, gelöst in einem Kohlenwasserstofflösungsmittelaromatischer Etheraktivator-Medium, wie nach dem Verfahren gemäß den Ansprüchen 1 bis 10 erhältlich.

12. Verfahren zur Herstellung von symmetrischen Blockcopolymeren, die von monovinylaromatischen Monomeren, konjugierten Dienen und gegebenenfalls zusätzlichen polaren Vinylmonomeren abgeleitet sind, mit einer Kombination aus enger Molekulargewichtsverteilung (Mw/Mn≤1,20) und einem verhältnismäßig niedrigen Vinylgehalt (≤18 %) der vorwiegend Poly(konjugiertes Dien)blöcke, durch anionische Polymerisation unter Verwendung der nach den Ansprüchen 1 bis 11 erhältlichen α,ω-Dilithioinitiatorlösung.

13. Verfahren nach Anspruch 12, dadurch gekennzeichnet, daß lineare Blockcopolymere, bestehend aus monovinylaromatischem Monomer, konjugiertem Dien und gegebenenfalls einem polaren Vinylmonomer mit der Struktur ABA, ABCBA, CBC, ACBCA oder CABAC, hergestellt werden, welches Verfahren umfaßt:
(1) Zusetzen eines überwiegend konjugierten Dienmonomers, wie zuvor spezifiziert, zu der zuvor beschriebenen α,ω-Dilithioinitiatorlösung und im wesentlichen vollständiges Polymerisierenlassen; anschließend
(2) Zusetzen eines überwiegend monovinylaromatischen Monomers oder eines überwiegend polaren Vinylmonomers nach dem Einbringen einer Endverkappung und Zusetzen eines polaren Lösungsmittels wie eines Ethers, und im wesentlichen vollständiges Polymerisierenlassen; und gewünschtenfalls
(3) Einführen eines Reagenz zum Einbringen einer Endverkappung der lebenden Polymeren und Einbringen eines polaren Co-Lösungsmittels wie eines Ethers und Zusetzen eines überwiegend polaren Vinylmonomers und im wesentlichen vollständiges Polymerisierenlassen.

14. Verfahren nach Anspruch 13, dadurch gekennzeichnet, daß in Stufe 3 als Endverkappungsreagenz Diphenylethylen verwendet wird.

15. Symmetrische Blockcopolymere, erhältlich nach dem Verfahren gemäß den Ansprüchen 12 bis 14, gekennzeichnet durch die Kombination einen engen Molekulargewichtsverteilung (Mw/Mn ≤ 1,20) mit einem verhältnismäßig niedrigen Vinylgehalt der überwiegend Poly(konjugiertes Dien)blöcke (≤ 18 %).

16. Blockcopolymere nach Anspruch 15, dadurch gekennzeichnet, daß sie lineare Fünfblockcopolymere sind, abgeleitet von Styrol, Butadien und tert.Butylmethaycrylat als reine Blockkonstituenten.

17. Symmetrische lineare Blockcopolymere nach den Ansprüchen 15 und 16, dadurch gekennzeichnet, daß die Blöcke C vollständig oder partiell hydrolysiert worden sind (restlicher Estergehalt ≤70 Mol-%).

## Revendications

1. Procédé de préparation d'un diinitiateur organolithique industriel efficace, comprenant la réaction de deux équivalents d'initiateur monoorganolithique avec du 1,3-diisopropénylbenzène à une température dans l'intervalle de -20° à 60°C dans un solvant hydrocarboné non polaire, et éventuellement en présence d'une amine tertiaire dans une gamme de rapports molaires par rapport au monoorganolithium allant de 0,1 à 10, suivie de l'addition au mélange réactionnel d'une petite quantité de monomère de diène conjugué et d'au moins 15 % en volume d'un activateur d'éther aromatique par rapport au volume de solvant total, éventuellement mélangés avec un composé d'alcoxylithium comportant de 1 à 10 atomes de carbone, à une température dans l'intervalle de 0 à 30°C, pour former une solution d'un initiateur d'α,ω-dilithio poly(diène conjugué), ayant un poids moléculaire apparent dans la gamme de 500 à 4.000, tel que déterminé par une chromatographie à perméation de gel utilisant des polymères de calibrage standards de polystyrène.

2. Procédé suivant la revendication 1, caractérisé en ce que comme initiateur monoorganolithique on utilise le sec-butyllithium ou le tert-butyllithium.

3. Procédé suivant la revendication 1, caractérisé en ce que la réaction de 1,3-diisopropylbenzène avec l'initiateur monoorganolithique se situe dans l'intervalle de 10 à 30°C.

4. Procédé suivant la revendication 1, caractérisé en ce que le solvant hydrocarboné non polaire est choisi parmi les cycloalcanes, comportant de 5 à 8 atomes de carbone.

5. Procédé suivant la revendication 1, caractérisé en ce que les activateurs du type éther aromatique sont choisis parmi l'anisole, l'éther diphénylique et/ou leurs dérivés dans lesquels au moins un noyau phényle a été substitué par un ou plusieurs groupes alkyle ou groupes alcoxy contenant de 1 à 3 atomes de carbone.

6. Procédé suivant l'une quelconque des revendications 1 à 5, caractérisé en ce qu'on utilise un composé d'alcoxylithium comportant 3 à 6 atomes de carbone et en une concentration de 0,5 à 5 équivalents molaires par équivalent de lithium déjà présent.

7. Procédé suivant l'une quelconque des revendications 1 à 6, caractérisé en ce que la quantité d'activateur du type éther aromatique à appliquer dans le milieu réactionnel se situe dans la gamme de 15 à 40 % en volume.

8. Procédé suivant la revendication 7, caractérisé en ce que la quantité d'activateur éther aromatique se situe dans la gamme de 15 à 25 % en volume.

9. Procédé suivant l'une quelconque des revendications 1 à 8, caractérisé en ce que le diène conjugué utilisé en petites quantités vis-à-vis du milieu réactionnel est le butadiène ou l'isoprène.

10. Procédé suivant la revendication 7, caractérisé en ce que le poids moléculaire apparent de l'initiateur α,ω-dilithio préparé se situe dans la gamme de 1500 à 2300.

11. Solutions de produit réactionnel, comprenant l'initiateur α,ω-dilithio stable dissous dans un milieu activateur solvant hydrocarboné-éther aromatique, telles qu'obtenables suivant le procédé des revendications 1-10.

12. Procédé de préparation de copolymères blocs symétriques, provenant de monomères aromatiques monovinyliques, de diènes conjugués et éventuellement additionnellement de monomères vinyliques polaires, ayant une combinaison de distribution de poids moléculaires étroite (Mw/Mn ≤ 1,20) et une teneur en vinyle relativement basse (≤ 18 %) des blocs essentiellement de poly(diène conjugué), par une polymérisation anionique utilisant la solution d'initiateur α,ω-dilithio obtenable suivant les revendications 1-11.

13. Procédé suivant la revendication 12, caractérisé en ce qu'on prépare des copolymères blocs linéaires constitués de monomère monovinylaromatique, de diène conjugué et éventuellement d'un monomère vinylique polaire respectivement de la structure ABA, ABCBA, CBC, ACBCA ou CABAC, comprenant :
(1) le chargement d'un monomère essentiellement de diène conjugué dans la solution d'initiateur α,ω-dilithio obtenable suivant l'une quelconque des revendications 1-11 et le traitement jusqu'à polymérisation essentiellement complète; ensuite
(2) le chargement d'un monomère essentiellement monovinyl-aromatique ou d'un monomère essentiellement vinylique polaire après introduction d'un agent de coiffage et addition d'éther et le traitement jusqu'à polymérisation essentiellement complète; et éventuellement
(3) l'introduction d'un réactif pour l'introduction d'une coiffe sur les polymères vivants et l'introduction d'un éther et le chargement d'un monomère essentiellement vinylique polaire et le traitement jusqu'à polymérisation essentiellement complète.

14. Procédé suivant la revendication 13, caractérisé en ce que dans l'étape 3 on utilise le diphényléthylène comme réactif de coiffage.

15. Copolymères blocs symétriques, obtenables par le procédé suivant les revendications 12-14, caractérisés par la combinaison d'une distribution de poids moléculaires étroite (Mw/Mn ≤ 1,20), une teneur en vinyle relativement basse des blocs essentiellement de poly(diène conjugué) (≤ 18 %).

16. Copolymères blocs suivant la revendication 15, caractérisés en ce qu'ils sont des copolymères à cinq blocs linéaires, provenant de styrène, de butadiène et de méthacrylate de tert-butyle comme constituants de blocs purs.

17. Copolymères blocs linéaires symétriques suivant l'une ou l'autre des revendications 15 et 16, caractérisés en ce que les blocs C ont été complètement ou partiellement hydrolysés (teneur en ester résiduel de ≤ 70 moles %).
